# EUROPEAN PATENT APPLICATION

(11) **EP 1 296 270 A1**
(43) Date of publication of application: **26.03.2003**
(21) Application number: 02256567.5
(22) Date of filing: 20.09.2002
(51) Int. Cl.: G06F 17/60

(54) **Contract management aid apparatus**

(30) Priority: 21.09.2001 GB 0122869
(71) Applicant: Hewlett-Packard Company, Palo Alto, CA 94304 (US)
(72) Inventor: Salle, Mathias Jean Rene, Palo Alto, CA 94306 (US); Baldwin, Adrian, Downend, Bristol BS16 6LQ (GB); Boulmakoul, Abdel, Bristol BS6 5JJ (GB)
(74) Representative: Lawrence, Richard Anthony

(57) **Abstract**

The present invention provides apparatus for facilitating management of a plurality of inter-related contracts (20, 22, 24), which apparatus comprises:
(a) a contract information database (100) configured to receive data from a computerised contract management system (140), said database including data on each contract, the data comprising at least: (i) the identity of the contract; (ii) a deadline for the contract; and (iii) the dependency, if any known, of the contract on any other of the contracts; and
(b) processing means (120) operatively linked to the database and configured to process the data on each contract from the contract information database and use the known dependency data from the database and/or compute the dependency of each contract on any of the other contracts to generate a representative structure having nodes and linkages between nodes representative of the inter-relationship of the plurality of inter-related contracts.

## Description

The present invention relates to the field of contract management systems to facilitate contract fulfilment and provides a system to facilitate management of a plurality of inter-related contracts. This may suitably be incorporated into or used alongside an existing computerised contract management system.

### BACKGROUND TO THE INVENTION

Presently, 80% of business interactions are contract based. Contracts (including e-contracts, being contracts that are prepared and/or executed electronically) state the terms and conditions of a legally-binding agreement between two parties including the parties' rights and obligations, and typically comprise clauses to be fulfilled (e.g. agreeing to supply a certain quantity of goods by a given date) and penalty clauses stating the penalty that would be incurred by the party should they be in breach of the contract and not fulfil the terms of the contract. The effective management of contracts is very important in commerce and industry, and is particularly critical with respect to the 'just in time' services that are increasingly common today.

For many business contracts a business which is attempting to meet an order or fill a contract to its own customer will be reliant upon a series of sub contractors. For example, a company producing a product may be dependent on contracts with various parts suppliers, contract manufacturers, shops and even service centres. Whilst they will seek to monitor the individual contracts, it is generally difficult for them to fully appreciate the relationships between the contracts and particularly the effects that underperformance/delay in any one contract will have on the other contracts and ultimately on their ability to fulfil their contract with their own customer.

It is one general object of the present invention to provide a system to facilitate contract management which seeks to address this problem. Further benefits of the system will become apparent from the following.

### SUMMARY OF THE INVENTION

According to a first aspect of the present invention there is provided apparatus for facilitating management of a plurality of inter-related contracts, which apparatus comprises: (a) a contract information database configured to receive data from a computerised contract management system, said database including data on each contract, the data comprising at least: (i) the identity of the contract; (ii) a deadline for the contract; and (iii) the dependency, if any known, of the contract on any other of the contracts; and (b) processing means operatively linked to the database and configured to process the data on each contract from the contract information database and use the known dependency data from the database and/or compute the dependency of each contract on any of the other contracts to generate a representative structure having nodes and linkages between nodes representative of the inter-relationship of the plurality of inter-related contracts.

The processing means of the apparatus are particularly preferably configured to display the representative structure graphically. Particularly preferably the apparatus and suitably specifically the processing means are configured to analyse the representative structure in order to present to a user required or necessary information on the status or relationships of the contracts.

Preferably the processing means are configured to generate a respective node for each stage of each contract that is comprised of stages and to generate linkages between interdependent stages within or between the contracts.

Particularly preferably the processing means are configured to highlight at least one of the nodes in the representative structure when displayed in a graphical display to alert the user to a performance problem at that node.

Advantageously, where the processing means are configured to generate a graphical display of the representative structure, it is further operable to generate and display other views on the data. These may suitably comprise one or more graphical displays showing the contracts or contract stages relative to a time-line.

Preferably the apparatus further comprises an interface for the user to request information from the representative structure.

Preferably the processing means are operable to generate a graphical display on a display screen, the display screen providing a graphical user interface, enabling the user to interface by selecting items displayed on the display screen.

The apparatus of the present invention may further comprise an adaptor interface for receiving the data from the computerised contract management system and to re-format the data to a format standardised for storage in the contract information database. This adaptor interface may suitably include adaptors for a number of different existing contract information databases and may be implemented in hardware or software.

The apparatus is preferably further configured to poll the associated computerised contract management system to obtain required data for storage by the contract information database.

Particularly preferably the system is further configured to poll the computerised contract management system throughout the performance of the contract to obtain update information on the current status of at least one of and preferably all of the plurality of inter-related contracts. Conversely, where the computerised contract management system is configured to be integral with or part of the apparatus of the present invention, the apparatus for facilitating contract management may itself be configured to automatically transmit update contract status information to the contract information database.

According to a second aspect of the present invention there is provided processing means for facilitating management of a plurality of inter-related contracts, operable to receive data on each contract of the plurality of inter-related contracts from a computerised contract management system, the data comprising at least: (i) the identity of the contract; (ii) a deadline for the contract; and (iii) the dependency, if any known, of the contract on any other of the contracts; and further operable to process the data on each contract and use the known dependency data and/or compute the dependency of each contract on any of the other contracts to generate a structure having nodes and linkages between nodes representative of the inter-relationship of the plurality of inter-relating contracts.

According to a third aspect of the present invention there is provided a method of facilitating management of a plurality of inter-related contracts, said method comprising: receiving data on each contract of the plurality of inter-related contracts from a computerised contract management system, the data comprising at least: (i) the identity of the contract; (ii) a deadline for the contract; and (iii) the dependency, if any known, of the contract on any other of the contracts; and processing the data on each contract and using the known dependency data to generate a structure having nodes and linkages between nodes representative of the inter-relationship of the plurality of inter-relating contracts.

According to a fourth aspect of the present invention there is provided a computer program operable to execute a method of facilitating management of a plurality of inter-related contracts, said method comprising: receiving data on each contract of the plurality of inter-related contracts from a computerised contract management system, the data comprising at least: (i) the identity of the contract; (ii) a deadline for the contract; and (iii) the dependency, if any known, of the contract on any other of the contracts; and processing the data on each contract and using the dependency data to generate a structure having nodes and linkages between nodes representative of the inter-relationship of the plurality of inter-relating contracts.

According to a fifth aspect of the present invention there is provided a computer program stored on a data carrier and operable to execute a method of facilitating management of a plurality of inter-related contracts, said method comprising: receiving data on each contract of the plurality of inter-related contracts from a computerised contract management system, the data comprising at least: (i) the identity of the contract; (ii) a deadline for the contract; and (iii) the dependency, if any known, of the contract on any other of the contracts; and processing the data on each contract and using the dependency data to generate a structure having nodes and linkages between nodes representative of the inter-relationship of the plurality of inter-relating contracts.

### BRIEF DESCRIPTION OF THE DRAWINGS

A preferred embodiment of the present invention will now be more particularly described, by way of example, with reference to the accompanying drawings, wherein:
Figure 1 is a simple system architecture diagram;
Figure 2 is an expanded view of part of the system diagram showing examples of the data sets that are supplied from the contract information database to the graphing processor;
Figure 3 is a diagram of a simple overview screen display, showing the inter-relationship of an inter-related group of contracts as nodes with links between them;
Figure 4 is a diagram of a secondary screen display, showing expanded detail of the contract stages behind the contract nodes in the Figure 3 display, in the form of stage nodes, and
Figure 5 is a diagram of an alternative display giving a graphical representation of the inter-relationship of the contracts against a time-line.

### DETAILED DESCRIPTION OF PREFERRED EMBODIMENTS

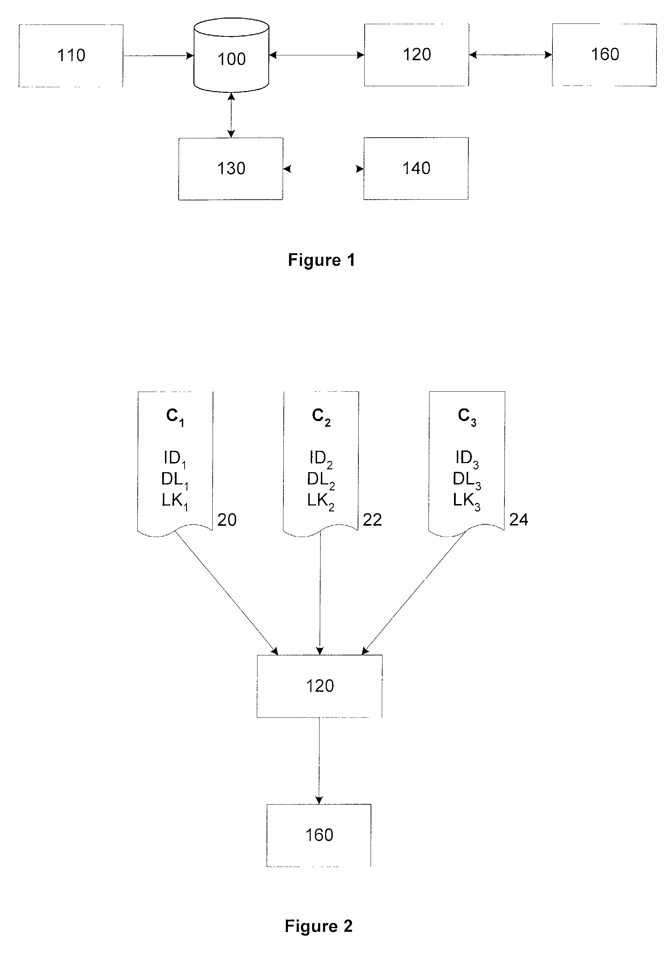

Referring to Figures 1 and 2, these show a simple preferred embodiment of the system of the invention, in which the system comprises a contract information database 100, suitably in the form of a non-volatile computer memory, linked to a computer processor 120 that is programmed to process contract information from the contract information database 100 to generate a graphical representation of the inter-relationship of contracts to be displayed on a display screen 160 or, if desired, printed out.

The contract information database 100 is set up to contain a respective data file or linked set of files 20, 22, 24 on each contract of the inter-related group of contracts C₁, C₂, C₃. As indicated in the Figure 2 diagram, for each contract C₁ - C₃ the information comprises, at a minimum, the identity of the contract ID₁₋₃, at least one deadline for the contract DL₁₋₃ by which a criterion of the contract must be met and a linkage designation LK₁₋₃ of which other, if any, contract(s) of the inter-related group of contracts, the contract is linked to. The linkage designation is referred to below as the 'dependency' of the contract. This dependency may be known of in advance or may need to be requested by the system or computed by the system by, for example, matching expected outputs with the dependencies of other contracts/contract stages. A combination of known dependency data storage, computation of suitable dependencies and request to the user for input of additional dependency data may be necessary.

Each file 20, 22, 24 suitably holds the above-listed set of information and further contract information suitably subdivided into the stages of each contract in the form:-

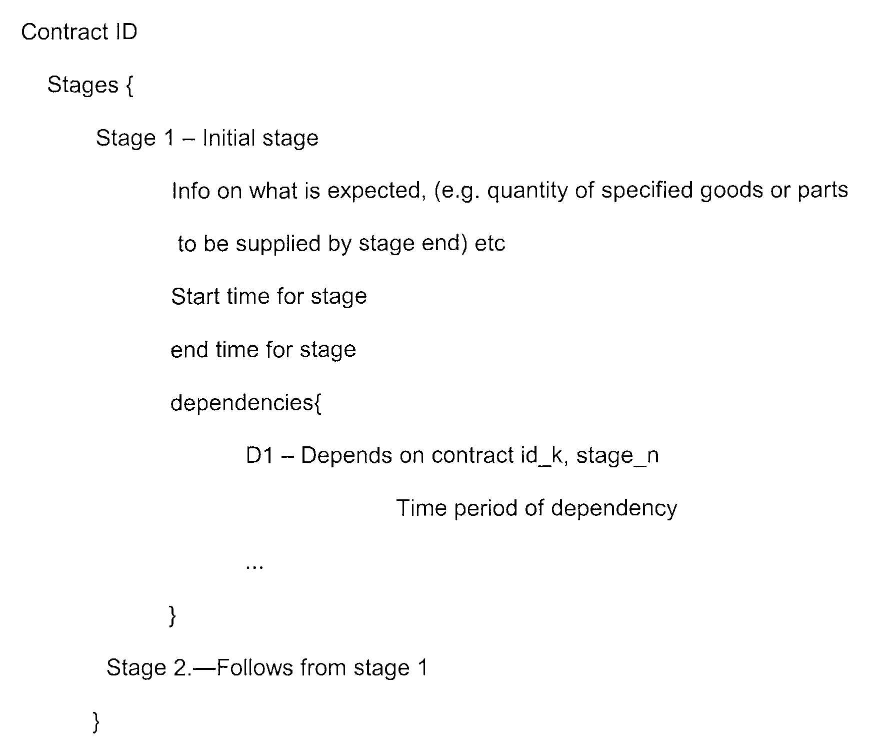

More information may usefully be included such as costs; penalty costs; the criticality of contracts. This may include not only quantities to be supplied but optionally also extra amounts that can be demanded.

Ideally, all this information is provided from a computerised contract management system 140. However, most such systems 140 do not contain all necessary information about dependencies and therefore a user may be expected to input such details himself. A data entry interface 110 is accordingly suitably provided linked to the contract information database 100 for the input of these details by the user. This may, of course, comprise a computer with keyboard and/or mouse and VDU that may be the same as or integral with the graphing processor 120 and display screen 160. Suitably a GUI is displayed on the display screen 160 and is configured for simplified manual entry of the relevant data by the user and having suitable prompts for the data required.

There are presently a substantial number of different computerised contract management systems 140 used commercially, many of which have their own distinctive format and programmatic interface and, accordingly, the present system is provided with an adaptor interface 130 to be able to interact with a particular computerised system and produce information about a contract in a standard format (e.g. defined by an XML schema). The adaptor interface 130 performs a format conversion taking information in one structure and placing it into a different format; containing empty fields where necessary. If a (single) standard form for the information exists this layer becomes unnecessary. For instances where the system needs to pull information from a number of computerised contract management systems 140 it will have a respective adaptor within the adaptor interface 130 for each different system 140.

As noted above, where any necessary information is missing (e.g. dependency information) the system has the ability to prompt the user for details or, if dependency information remains missing, to compute it - by trying to match the expected outputs of a given contract/contract stage with the needs and known dependencies of the other contracts/contract stages.

Once the system receives data from the contract management system 140 it will try to match it against its existing data, forming a type of graph structure linking the data into a form that can be reasoned about as a structure. For this there is suitably consistency between the contract ID numbers; although there may be a mapping mechanism in the adaptors to translate contract IDs into a standard form.

The graphing processor 120 of the system operates to process the information into a form such that it can navigate through the information as if it were a graph based on the dependencies.

The steps of the processing are broadly as follows:

A new contract is processed by:
1) Forming a contract node containing a list of stages.
   a. This node suitably contains:
      i. A list of contract stages,
      ii. Details, descriptions, times, responsibilities etc from the contract description;
2) For each stage in the contract
   a. Forming a contract stage node which contains
      i. ID, description, details, times etc in the stage description
      ii. A list to contain preceding stages
      iii. A list to contain following stages
      iv. A list of things on which this stage is dependent
      v. A list of things that rely on this stage
      vi. A list of problems
   b. Filling in the information from the stage description
   c. Filling in the information about which stages this one follows.
3) For each stage in the contract
   a. Looking in the contract node for which stages are being followed
   b. Searching through the stage list and placing a pointer to this stage in the following stage list.

A representation of the links within this contract now exists but this now needs to be incorporated into the structure of existing contracts. The contract structure may be more complex in terms of being represented by, for example, a series of sub-stages within each stage. This would increase the complexity of the representation and the algorithm would need expanding for this as necessary.

The system relies on pointers between nodes that, if the representation was contained in memory, could be simple pointers. However, the system is suitably operated to store data to disk and so suitably has a structure where a contract node has a (unique) name based on the contract ID (which is a key into information in a database). Equally, each stage (and sub-stages) suitably have (unique) names based on the contract ID and stage IDs. The lists may be held as columns in a database containing a serialised list of names.

The next stage in the algorithm is to check the existing data for the dependency information for each stage and ensure that the two-way links exist in the graph structure.
1) For each contract stage:-
   a. From the initial representation pull the dependency list.
   b. Search the database for the contract stages specified in the dependency list.
   c. For each element in the dependency list:
      i. place the contract, stage names etc in the list of things that this contract stage depends on
      ii. add the current contract stage into the dependent node's list of things that rely on it
      iii. Update the dependent node in the database.
   d. There may be nodes that are not currently in the structure, accordingly:
      i. Create a place holder contract node and stage nodes in the database
      ii. insert the current contract stage name into the current pointer list.
2) Place the current contract into the database
   a. Firstly, check if there is a placeholder node.
   b. If there is, modify the information to match the currently held information. Otherwise create a new entry with the information within the contract node.
   c. For each stage node.
      i. If a place holder node exists:
         1. merge the dependency lists; and
         2. modify the rest of the information to form a full node.
      ii. Otherwise form a new entry containing the information within the current stage node.

The database now contains a set of entries which collectively define the intended graph structure containing information about contracts and their stages and their relationships with other contracts. Where placeholder nodes have been created the user should be prompted that no information exists about dependent contracts such that they can enter what information they have or tell the system which contract management system contains details and therefore to download this information in a similar manner.

The dependency information described in the above algorithm contains only the name of the stage. Ideally a dependency node would be created that contains other information given in the description such as the time before the stage end when the dependency occurs.

Having entered the new contract details, validation algorithms can be run.

For example, to check that the times that dependencies occur fall within the time at which the stage finishes:
1) For the new contract follow the stage list
   a. For each stage
      i. Fetch the dependent stages from the database
      ii. Check that the dates coincide (where possible using the time at which the dependency is in the stage).
      iii. If the dates don't coincide add a problem report into the problem list of this contract.
   b. For each stage
      i. Run through the dependent stage list.
      ii. Check that the dates coincide. Where problems exist enter a problem report into the dependent contract stages problem list.

### Displaying the contract information.

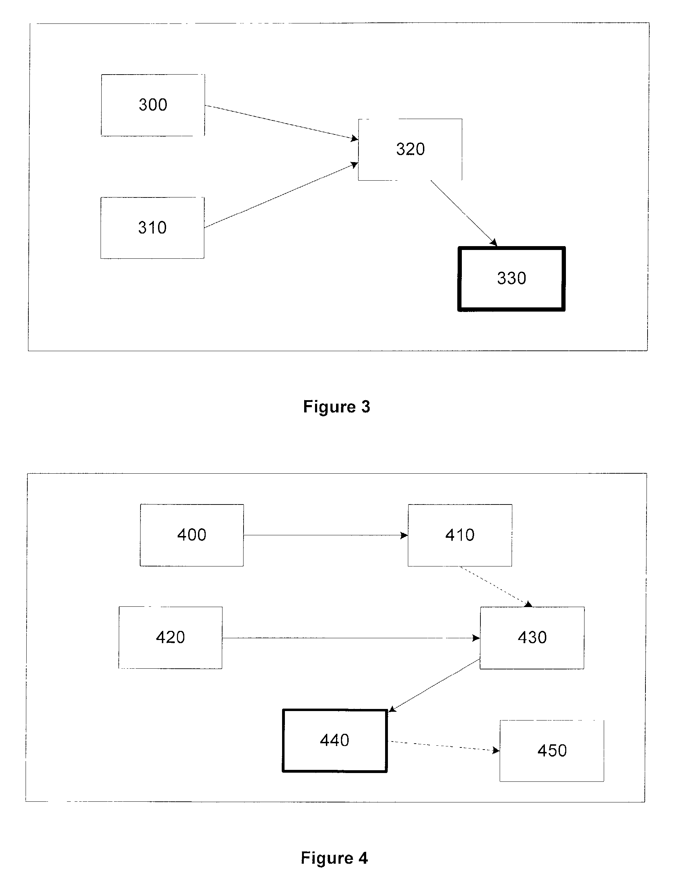

Referring to Figure 3, the initial display illustrated is a graph/map in which there are four nodes 300, 310, 320, 330. Each node represents a respective contract and with arrows between the nodes representing aggregations of the dependencies between the contracts. An icon may be provided on each node to identify the type of the contract it represents (if this information is supplied). To particular advantage, the colour or shape of a node or other prominent marking on the node may be used to indicate existence of a contract performance problem with the node. In the illustrated embodiment the final contract node 330 is marked with a bold outline to distinguish it from the other nodes and highlight it as having a problem in contract performance.

To form this display an algorithm within the graphing processor 120 scans through each stage of each contract and extracts the paths to other contracts, as well as forming an aggregated problem list. The algorithm calls upon a store of graphic symbols to represent each contract node and organises them in a two-dimensional arrangement for the display with the arrows between the node symbols as dictated by the contract dependencies. Indeed, although the graph is most commonly best represented by a two-dimensional arrangement of symbols it could, for complex agreements, be represented in a three-dimensional arrangement. Whether two-dimensional or three-dimensional, the generation of the display may use any of a number of existing graphic display generating algorithms - for example, as used in Hewlett-Packard's 'Openview' network management software and to which the conventional Swing components (swing tree) and XML tools are added.

As noted earlier, an important feature of the system is its ability to highlight the problem contracts and stages amongst the inter-related contracts.

It may be possible to set rules on which problems (or details of such) should cause different colours to be displayed at the contract node level, i.e. to generate different visual indicators for different types of problem.

Although the simple Figure 3 display, showing very simple dependencies at the contract level, is not greatly informative it can be very useful where many contracts are involved. The highlighting of the nodes also very usefully suggests that there could be a problem that can be further investigated, suitably by digging down on that node by, for example, selecting the node using a mouse-controlled cursor on-screen.

The user has the ability to expand any node to look for the problem stages within the contract or look at the aggregated problem list. Figure 4 shows the expansion of two of the contract nodes 300, 330 into a pair of stages 400, 410 and 440, 450 respectively. This shows the ordering of the stages and the dependencies between them.

As such the user would be able to use the graph structure as a console onto the set of contracts that they are managing. Looking at properties of each node will either give aggregated information from constituent stages or sub-stages or the actual details where they exist.

On viewing the display illustrated in Figure 4 it becomes obvious that the first stage of the final contract, as represented by highlighted node 440, will fail. By then looking more closely at the problem information the user may establish that it is due to a verification report, or due to problem events as received from the contract management system. Details may be obtained by selecting a node and, for example, selecting from a menu of types of information available.

In certain cases, further enabling contracts could be set-up, for example with alternative suppliers. These would exist on the contract maps and therefore the user can see that there are potential alternative suppliers in case of problems.

### Analysis

The system of the invention has an analytical facility/engine, embodied in hardware or software and which may be within or linked to the graphing processor 120, to analyse the graph structure formed from the contract information data. The graphing processor 120 may, loaded with one or more appropriate algorithms, double as this analytical engine. The user can thus not only examine the graph structure but is also able to use the structure to run an analysis algorithm on the structure to find further information. For example, an algorithm may be run through the timing information and identify those contracts that are just delivering on time. This may be combined with cost information to identify where costly failures are. A user may select a contract that they must deliver on and request the analytical facility to identify which points are critical from a time point of view.

In one preferred embodiment the analytical facility comprises a simple algorithm to look walk backwards through the graph structure using the lists of contracts that are relied upon and identify any of the links/dependencies that are very time-sensitive, say within one day or a set threshold of required success. Any identified problems are marked suitably by the relevant node and/or linking arrow being highlighted as discussed previously. The same rule can then be applied in turn to other stages of the contract or dependant contracts.

Such an algorithm may be 'plugged' into the system and customised according to the available information. Some algorithms could be triggered not by structure analysis but instead by problem reports. For example, where several suppliers exist a problem report with one supplier could trigger display of a suggestion to increase supply from other suppliers.

Other analysis may be based on the user selecting a stage and asking "what if" queries such as: "What if a selected subcontractor delivers half the required amount?"; or "What if the delivery is one day late?" The system can issue a problem report on the in-memory representation of the graph and trigger other analysis algorithms to propagate problems through the graph structure.

A rule could be run such that if there is a problem with lateness then this is propagated through to the next stage and dependant contract stages. Temporary problem reports will be generated at these nodes which can be propagated to connected nodes in the same manner.

In this way algorithms can be run on nodes as events occur. Where they are event triggered they send events to other nodes which apply the rules; and where necessary they add information to the problems or to the property data and issue problems on relying node.

### Other views on the data

The graphing processor 120 of the preferred embodiment has the very useful ability to generate alternative graphical representations. These may include an expandable graph view of the data from which data of detailed properties can be viewed. For example, an event time-line could be drawn by the processor 120 showing when things are required or expected.

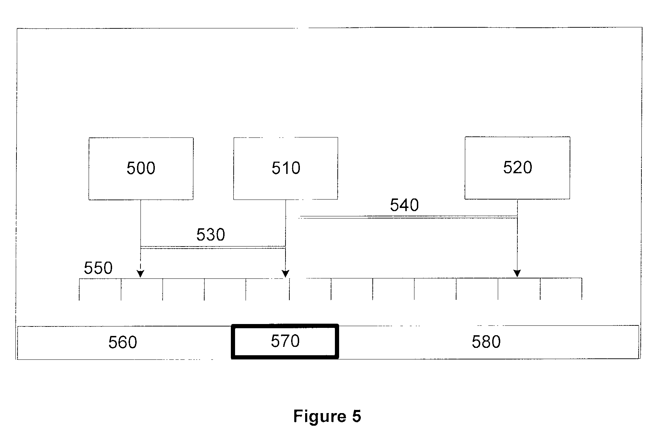

Referring to Figure 5, in this display each contract stage 500, 510, 520 has an arrow to point to the timeline 550 to indicate when that stage is expected to finish. Horizontal double lines 530, 540 are displayed tying dependent stages together.

As further illustrated in the Figure 5 display, the portion 570 of the timeline where a problem exists, or is anticipated, is identified as a box defined in bold between timeline portions 560, 580 where no problem yet exists or is yet anticipated. Contracts' properties are viewable by selecting an individual contract box. Problems may be indicated in this display by colouring or otherwise highlighting these boxes or the links between the boxes, where these are problematic.

Since the graph can become very crowded where large volumes of data are represented, filters may be applied and the user can focus in on areas of the time-line and then scroll the line.

## Claims

1. Apparatus for facilitating management of a plurality of inter-related contracts (20, 22, 24), which apparatus comprises:
(a) a contract information database (100) configured to receive data from a computerised contract management system (140), said database including data on each contract, the data comprising at least: (i) the identity of the contract; (ii) a deadline for the contract; and (iii) the dependency, if any known, of the contract on any other of the contracts; and
(b) processing means (120) operatively linked to the database and configured to process the data on each contract from the contract information database and use the known dependency data from the database and/or compute the dependency of each contract on any of the other contracts to generate a representative structure having nodes and linkages between nodes representative of the inter-relationship of the plurality of inter-related contracts.

2. Apparatus as claimed in Claim 1, wherein the processing means (120) are configured to display the representative structure graphically.

3. Apparatus as claimed in Claim 1 or Claim 2, wherein the processing means (120) are configured to analyse the representative structure to determine and present to a user required or necessary information on the status or relationships of the contracts.

4. Apparatus as claimed in any preceding Claim, wherein the processing means (120) are configured to generate a respective node for each stage of each contract that is comprised of stages and to generate linkages between interdependent stages within or between the contracts.

5. Apparatus as claimed in any preceding Claim, wherein the processing means (120) are configured to highlight at least one of the nodes in the representative structure when displayed in a graphical display (160) to alert the user to a performance problem at that node.

6. Apparatus as claimed in any preceding Claim, wherein the processing means (120) are further operable to generate a graphical display of the representative structure showing the contracts or contract stages relative to a time-line (550).

7. Apparatus as claimed in any preceding Claim, further comprising an interface for the user to request information from the representative structure.

8. Apparatus as claimed in any preceding Claim, wherein the processing means (120) are operable to generate a graphical display on a display screen (160), the display screen providing a graphical user interface.

9. Apparatus as claimed in any preceding Claim, further comprising an adaptor interface (130) for receiving data from the computerised contract management system (140) and to re-format the data to a format standardised for storage in the contract information database (100).

10. Apparatus as claimed in any preceding Claim, further configured to poll the associated computerised contract management system (140) to obtain required data for storage by the contract information database (100).

11. Apparatus as claimed in any preceding Claim, further configured to poll the computerised contract management system (140) throughout the performance of the contract to obtain update information on the current status of at least one of the plurality of inter-related contracts.

12. Apparatus as claimed in any preceding Claim, wherein the computerised contract management system (140) is configured to be integral with or part of the apparatus for facilitating contract management, and the apparatus for facilitating contract management is configured to automatically transmit update contract status information to the contract information database (100).

13. Processing means (120) for facilitating management of a plurality of inter-related contracts (20, 22, 24), operable to receive data on each contract of the plurality of inter-related contracts from a computerised contract management system (140), the data comprising at least: (i) the identity of the contract; (ii) a deadline for the contract; and (iii) the dependency, if any known, of the contract on any other of the contracts; and further operable to process the data on each contract and use the known dependency data and/or compute the dependency of each contract on any of the other contracts to generate a structure having nodes and linkages between nodes representative of the inter-relationship of the plurality of inter-relating contracts.

14. A method of facilitating management of a plurality of inter-related contracts (20, 22, 24), said method comprising:
receiving data on each contract of the plurality of inter-related contracts from a computerised contract management system (140), the data comprising at least: (i) the identity of the contract; (ii) a deadline for the contract; and (iii) the dependency, if any known, of the contract on any other of the contracts; and
processing the data on each contract and using the known dependency data to generate a structure having nodes and linkages between nodes representative of the inter-relationship of the plurality of inter-relating contracts.

15. A computer program operable to execute a method of facilitating management of a plurality of inter-related contracts (20, 22, 24), said method comprising:
receiving data on each contract of the plurality of inter-related contracts from a computerised contract management system (140), the data comprising at least: (i) the identity of the contract; (ii) a deadline for the contract; and (iii) the dependency, if any known, of the contract on any other of the contracts; and
processing the data on each contract and using the known dependency data to generate a structure having nodes and linkages between nodes representative of the inter-relationship of the plurality of inter-relating contracts.

16. A computer program stored on a data carrier and operable to execute a method of facilitating management of a plurality of inter-related contracts (20, 22, 24), said method comprising:
receiving data on each contract of the plurality of inter-related contracts from a computerised contract management system (140), the data comprising at least: (i) the identity of the contract; (ii) a deadline for the contract; and (iii) the dependency, if any known, of the contract on any other of the contracts; and
processing the data on each contract and using the known dependency data to generate a structure having nodes and linkages between nodes representative of the inter-relationship of the plurality of inter-relating contracts.
